# EUROPÄISCHE PATENTANMELDUNG

(11) **EP 2 710 905 A1**
(43) Veröffentlichungstag der Anmeldung: **26.03.2014**
(21) Anmeldenummer: 13184782.4
(22) Anmeldetag: 17.09.2013
(51) Int. Cl.: A23L 1/302, A23L 1/304, A23L 2/52, A23L 2/60, A23L 1/30

(54) **Sportgetränk**

(30) Priorität: 20.09.2012 DE 102012108841
(71) Anmelder: PM-International AG, 1618 Luxembourg (LU)
(72) Erfinder: Sorg, Rolf, 5444 Schengen (LU); Kühne, Dr. Tobias, 54497 Morbach (DE); Lauinger, Christian, 76275 Ettlingen (DE); Iken, Dr. Marcus, 67105 Schifferstadt (DE); Messer, Wilhelm, 67098 Bad Dürkheim (DE)
(74) Vertreter: Zech, Stefan Markus

(57) **Zusammenfassung**

Die vorliegende Erfindung bezieht sich auf ein Sportgetränk, oder Pulver bzw. Konzentrat zum Anrühren eines solchen, zur Aufnahme in einer ersten Phase vor der sportlichen Betätigung, in einer zweiten Phase während der sportlichen Betätigung und in einer dritten Phase nach der sportlichen Betätigung, umfassend eine Vielzahl von Mineralien, und ggf. Vitaminen, sowie mindestens ein immunsystemunterstützen-des Mittel, insbesondere mindestens ein Antioxidationsmittel, zur Resorption während der ersten und dritten Phase, und mindestens ein Kohlenhydrat zur Resorption insbesondere während der zweiten Phase sowie mindestens einen Kohlenhydratresorptionsverstärker zur Steigerung der Kohlenhydratresorption.

## Beschreibung

Die Erfindung betrifft ein Sportgetränk bzw. ein Pulver oder Konzentrat zum Anrühren eines solchen.

Derartige Sportgetränke sind im Stand der Technik bereits bekannt. Beispielsweise die DE 202 16 946 U1 beschreibt ein Fruchtsaftgetränk mit Holundersaft, Cranberrysaft, Süßmolkepulver und Carnitin. Dabei wird vorgeschlagen, Kohlenhydrate, Vitamine und Mineralstoffe zuzufügen.

Im Stand der Technik wird die Zusammensetzung des Sportgetränks üblicherweise im Hinblick auf die Bedürfnisse des Sportlers während des Sports optimiert. Die Regenerationsphase nach dem Sport wird zwar teilsweise angesprochen, steht jedoch nicht im Mittelpunkt. Daher werden üblicherweise für die Regenerationsphase andere Mittel, insbesondere Getränke, verwendet. Dies erhöht den (insbesondere logistischen und organisatorischen) Aufwand für den Sportler.

Es ist daher Aufgabe der vorliegenden Erfindung, den Aufwand für den Sportler zu reduzieren bei gleichzeitig hohem Leistungspotential und schneller Regeneration.

Diese Aufgabe wird durch ein Sportgetränk oder ein Pulver bzw. Konzentrat zum Anrühren eines solchen gemäß Anspruch 1 gelöst.

Insbesondere wird die Aufgabe durch ein Sportgetränk zur Aufnahme in einer ersten Phase vor der sportlichen Betätigung, in einer zweiten Phase während der sportlichen Betätigung und in einer dritten Phase nach der sportlichen Betätigung, gelöst. Das Sportgetränk umfasst eine Vielzahl von Mineralien, und ggf. Vitaminen, sowie mindestens ein immunsystemunterstützendes Mittel, insbesondere mindestens ein Antioxidationsmittel zur Resorption während der ersten und dritten Phase und mindestens ein Kohlenhydrat zur Resorption insbesondere während der zweiten Phase sowie mindestens einen Kohlenhydratresorptionsverstärker zur Steigerung der Kohlenhydratresorption.

Ein Kern der Erfindung liegt darin, ein Drei-Phasen-Sportgetränk bereitzustellen, das sich dadurch auszeichnet, dass in allen drei Phasen einer sportlichen Betätigung (vor, während und nach der sportlichen Betätigung) durch eine spezielle Wirkstoffzusammensetzung ein hoher Wirkungsgrad erzielt wird. Dabei wird gleichzeitig eine hohe Leistung des Sportlers ermöglicht sowie eine schnelle Regeneration. Erfindungsgemäß wurde erkannt, dass schon die Phase vor der sportlichen Betätigung besonders wichtig ist. Weiterhin wurde erkannt, dass der menschliche Körper während der sportlichen Betätigung weniger (bis keine) Mineralstoffe und Vitamine resorbiert (auch wenn diese zur Verfügung gestellt werden), jedoch Kohlenhydrate. Beim vorliegenden Sportgetränk dienen daher die vorgeschlagenen Mineralien auch weniger der Zufuhr in der zweiten Phase, sondern vielmehr dem Auffüllen des Mineralstoffvorrats im Körper während der ersten und dritten Phase.

Vorzugsweise umfasst das Sportgetränk weiterhin einen Sauerstoffaufnahmeverstärker, insbesondere ein Algenpulver, zur Verbesserung der Sauerstoffaufnahme. Das Algenpulver (allgemein Algensubstanz) kann Braunalgen oder Braunalgenextrakte umfassen. Durch den Sauerstoffaufnahmeverstärker (z.B. Algensubstanz) kann der Sauerstoff-Antransport im menschlichen Zellsystem verbessert werden. Zellbarrieren werden besser durchdrungen, so dass den Zellen mehr Sauerstoff zugeführt werden kann. Der Sauerstoffaufnahmeverstärker (insbesondere die Algensubstanz) beträgt vorzugsweise mindestens 0,0001 Gew.-%, weiter vorzugsweise mindestens 0,001 Gew.-%, noch weiter vorzugsweise mindestens 0,01 Gew.-%. Eine Obergrenze beträgt vorzugsweise 2 Gew.-%, weiter vorzugsweise 1 Gew.-%, noch weiter vorzugsweise 0,5 Gew.-%. Ohne gegenteilige Angaben sind hier und im Folgenden Prozentangaben stets Gew.-%-Angaben ohne Berücksichtigung von Wasser.

In einer konkreten Ausführungsform umfasst das Sportgetränk bzw. das Pulver oder Konzentrat mindestens eine erste kurzkettige Kohlenhydratkomponente zur schnellen Resorption, insbesondere im Dünndarm, zur schnellen Regeneration und Energiebereitstellung währen der sportlichen Betätigung, und mindestens eine langkettige Kohlenhydratkomponente zur verzögerten Bereitstellung einer zweiten kurzkettigen Kohlenhydratkomponente und verzögerte Resorption der zweiten kurzkettigen Kohlenhydratkomponente, insbesondere im Dickdarm. Besonders bevorzugt ist es, wenn erste und zweite kurzkettige Kohlenhydratkomponente identisch sind. Durch ein derartiges Sportgetränk wird dem Körper vergleichsweise viel Energie gleichzeitig zur Verfügung gestellt. Dies geschieht dadurch, dass verschiedene Aufnahmeorte für Kohlenhydrate genutzt werden. Insgesamt kann der Körper damit pro Zeiteinheit mehr Monosaccharide aufnehmen. Diese Monosaccharide werden vom Körper wiederum als Energieträger verwendet. Diese Weiterbildung zeichnet sich durch eine synergistische Wirkung zusammen mit dem Drei-Phasen-Gedanken und dem Sauerstoffaufnahmeverstärker (bzw. dem Braunalgensubstanz) aus. Gemäß dieser Weiterbildung wurde insbesondere erkannt, dass Kohlenhydrat- und Sauerstoffaufnahme ausgewogen aufeinander abgestimmt werden sollten. Dies wird mit nur wenigen Komponenten durch das vorliegende Sportgetränk erreicht.

In verschiedenen Weiterbildungen liegt in dem Sportgetränk mindestens ein Monosaccharid, insbesondere Glucose und/oder Fructose, vor. Weiterhin kann alternativ oder zusätzlich mindestens ein Disaccharid, insbesondere Saccharose, enthalten sein. Weiterhin kann zusätzlich oder alternativ mindestens ein Oligosaccharid vorhanden sein. In diesem Zusammenhang soll unter Oligosaccharid insbesondere ein Kohlenhydrat verstanden werden, das aus 2 bis 10 Monosaccharid-Einheiten aufgebaut ist, insbesondere aus zwei bis fünf Monosaccharid-Einheiten. Entsprechend soll es sich bei einer kurzkettigen Kohlenhydratkomponente vorzugsweise um eine Kohlenhydratkomponente handeln, die aus 1 bis 10 Monosaccharid-Einheiten, vorzugsweise 1 bis 5 Monosaccharid-Einheiten aufgebaut ist. In Abgrenzung dazu soll es sich bei der "langkettigen Kohlenhydratkomponente" bzw. bei Polysacchariden um ein Saccharid handeln, das vorzugsweise mehr als 10 Monosaccharid-Einheiten aufweist, insbesondere mehr als 100 Monosaccharid-Einheiten, weiter vorzugsweise mehr als 1.000 Monosaccharid-Einheiten.

Insgesamt dienen die Mono-, Di- und Oligosaccharide zur (schnellen) Regeneration und Energiebereitstellung während der sportlichen Betätigung. Es hat sich gezeigt, dass mit einen Mono-, Di- oder Oligosaccharid besonders viel Energie pro Zeiteinheit vom Körper aufgenommen werden kann.

Als langkettige Kohlenhydratkomponente kommt vorzugsweise Maltodextrin zum Einsatz. Maltodextrin kann bei guter Verträglichkeit besonders einfach zeitverzögert aufgeschlossen und anschließend resorbiert werden.

Ein Verhältnis der Summe der kurzkettigen Kohlenhydratkomponenten (insbesondere Glucose und/oder Fructose und/oder Saccharose) zu der langkettigen Kohlenhydratkomponente (insbesondere Maltodextrin) kann vorzugsweise 1:100 bis 1:10, weiter vorzugsweise 1:40 bis 1:60, weiter vorzugsweise (etwa) 1:50 betragen. Durch den vergleichsweise geringen Anteil der langkettigen Kohlehydratkomponente wird insgesamt erreicht, dass durch die kurzkettige Kohlenhydratkomponente viel Energie zur Verfügung gestellt werden kann und durch die langkettige Kohlenhydratkomponente noch ein gewisses Plus erreicht wird, das die Leistungsfähigkeit des Sportlers insgesamt nochmals erhöht. Gleichzeitig wird jedoch durch den vergleichsweise geringen Anteil von Maltodextrin (allg.: der langkettigen Kohlenhydratkomponente) auch erreicht, dass der Körper insbesondere während der zweiten Phase nicht zu sehr belastet wird. Durch das vorgeschlagene Verhältnis wird insgesamt erreicht, dass zwei grundsätzlich verschiedene Anforderungen, nämlich einer möglichst ausgewogenen Nährstoffaufnahme und einer möglichst schnellen Nährstoffaufnahme, auf optimale Weise Rechnung getragen wird.

Ein Verhältnis des Gewichts der ersten kurzkettigen Kohlenhydratkomponente zu dem Gewicht einer langkettigen Kohlenhydratkomponente, durch die die zur ersten Komponente identische zweite Kohlenhydratkomponente bereitgestellt wird, beträgt vorzugsweise 1:5 bis 1:40, weiter vorzugsweise 1:15 bis 1:25, weiter vorzugsweise (etwa) 1:20. In diesem Zusammenhang ist die erste kurzkettige Kohlenhydratkomponente vorzugsweise Glucose. Die langkettige Kohlenhydratkomponente ist vorzugsweise Maltodextrin. Ein Kerngedanke dieser Weiterbildung besteht darin, dass derselbe Zucker (insbesondere Glucose) einerseits als kurzkettige Kohlenhydratkomponente (insbesondere Monosaccharid) zur Verfügung gestellt wird und andererseits indirekt durch eine langkettige Kohlenhydratkomponente, die der menschliche Körper aufschließen kann. Es wird also derselbe Zucker sowohl vergleichsweise schnell (insbesondere über den Dünndarm) als auch zeitverzögert (insbesondere über den Dickdarm) zugeführt. Dadurch kann besonders viel Energie aufgenommen werden. Das vorgeschlagene Verhältnis hat sich dabei als besonders wirkungsvoll erwiesen.

Das Sportgetränk bzw. das Pulver oder Konzentrat zum Anrühren eines solchen weist insbesondere die folgenden Inhaltstoffe auf:
- Glucose, insbesondere in einem Anteil von 70 % - 85 %, vorzugsweise 78 % und/oder
- Fructose, insbesondere in einem Anteil von 28 % - 34 %, vorzugsweise 31 % und/oder
- Saccharose, insbesondere in einem Anteil von 35 % - 47 %, vorzugsweise 41 % und/oder
- Maltodextrin, insbesondere in einem Anteil von 1,0 % - 2,2 %, vorzugsweise 1,6 % und/oder
- Biotin, insbesondere in einem Anteil von 0,00010 % - 0,00022 %, vorzugsweise 0,00016 % und/oder
- Calcium, insbesondere in einem Anteil von 0,350 % - 1,1 %, vorzugsweise 0,84 % und/oder
- Chlorid, insbesondere in einem Anteil von 0,4 % - 0,9 %, vorzugsweise 0,66 % und/oder
- Folsäure, insbesondere in einem Anteil von 0,0004 % - 0,0009 %, vorzugsweise 0,00066 % und/oder
- Kalium, insbesondere in einem Anteil von 0,7 % - 1,3 %, vorzugsweise 1 % und/oder
- Magnesium, insbesondere in einem Anteil von 0,2 % - 0,5 %, vorzugsweise 0,38 % und/oder
- Natrium, insbesondere in einem Anteil von 0,8 % - 1,6 %, vorzugsweise 1,2 % und/oder
- Niacin, insbesondere in einem Anteil von 0,03 % - 0,08 %, vorzugsweise 0,053 % und/oder
- Pantothensäure (Vitamin B5), insbesondere in einem Anteil von 0,01 %-0,03 %, vorzugsweise 0,02 % und/oder
- Phosphor, insbesondere in einem Anteil von 0,5 % - 0,9 %, vorzugsweise 0,7 % und/oder
- Vitamin A (Provitamin A), insbesondere in einem Anteil von 0,0003 %-0,0007 %, vorzugsweise 0,00053 % und/oder
- Vitamin B1, insbesondere in einem Anteil von 0,002 % - 0,005 %, vorzugsweise 0,0037 % und/oder
- Vitamin B12, insbesondere in einem Anteil von 0,000006 % - 0,00001 %, vorzugsweise 0,0000085 % und/oder
- Vitamin B2, insbesondere in einem Anteil von 0,003 % - 0,006 %, vorzugsweise 0,0046 % und/oder
- Vitamin B6, insbesondere in einem Anteil von 0,003 % - 0,006 %, vorzugsweise 0,0046 % und/oder
- Vitamin C, insbesondere in einem Anteil von 0,2 % - 0,35 %, vorzugsweise 0,27 % und/oder
- Vitamin E, insbesondere in einem Anteil von 0,03 % - 0,05 %, vorzugsweise 0,06 %.

Durch die vorgeschlagene Zusammensetzung wird insgesamt während allen drei Phasen einer sportlichen Betätigung eine ausgewogene Nährstoff- bzw. Wirkstoffzufuhr realisiert. Insbesondere die B-Vitamine (z.B. Vitamin B1 und/oder Vitamin B6) wirken dabei als Kohlenhydratresorptionsverstärker. Vitamin B1 erhöht die Energie, die den Zellen des Sportlers zur Verfügung steht. Der Energiestoffwechsel wird verbessert. Bei Vitamin B6 wird insbesondere der Glycogenstoffwechsel sowie der Fettstoffwechsel verbessert.

Bei den %-Angaben handelt es sich um Gew.-%-Angaben bezogen auf das Gesamtgewicht des Getränks (oder Pulvers oder Konzentrats zum Anrühren eines solchen) ohne Berücksichtigung von Wasser.

Die oben genannte Aufgabe wird weiterhin gelöst durch ein Verfahren zur Verabreichung eines Sportgetränks der oben beschriebenen Zusammensetzung an einen Sportler, umfassend die Schritte:
Verabreichen einer ersten Portion (vorzugsweise 30 bis 60 min) vor der sportlichen Belastung derart, dass die Mineralstoffe zu Beginn der sportlichen Belastung (im Wesentlichen) resorbiert sind, Verabreichen einer zweiten Portion während der sportlichen Belastung derart, dass eine ausreichende Energieversorgung sichergestellt ist, und Verabreichen einer dritten Portion nach der sportlichen Belastung zur Wiederauffüllung des Kohlenhydrat- und Mineralstoffspeichers für eine optimierte Regeneration. Dieses Verfahren zeichnet sich dadurch aus, dass das Sportgetränk in allen drei Phasen in Zusammenhang mit der sportlichen Betätigung optimiert zum Einsatz kommt. Dadurch wird der organisatorische und logistische Aufwand des Sportlers reduziert.

Nachfolgend werden die charakteristischen Werte eines Ausführungsbeispiels des Sportgetränks gemäß der Erfindung angeführt.

Ausgehend von einer 500 ml Portion (30 g Inhaltsstoffe ohne Berücksichtigung von Wasser) gibt folgende Tabelle vorteilhafte Mengenwerte der einzelnen Inhaltsstoffe an. Bereiche innerhalb derer die jeweilige Substanz variiert werden kann, sind nicht angegeben, können jedoch auf einfache Weise aus den obigen Prozentangaben berechnet werden. Neben den angegebenen Substanzen können noch weitere Substanzen enthalten sein, die beispielweise der Aromatisierung und/oder der Löslichkeit von einzelnen Inhaltsstoffen dienen.

| Inhaltsstoff | | Menge in einer 30 g-Einheit (500 ml des Getränks) |
|---|---|---|
| Eiweiß | | < 0,1 g |
| Kohlenhydrate | | 24 g |
| | davon Zucker | 23,5 g |
| | davon Traubenzucker | 9,2 g |
| | davon Fructose | 2,0 g |
| | davon Saccharose | 12,3 g |
| | davon Maltodextrin | 0,5 g |
| Fett | | < 0,1 g |
| Biotin | | 50 µm |
| Calcium | | 252 mg |
| Chlorid | | 200 mg |
| Folsäure | | 200 µm |
| Kalium | | 300 mg |
| Magnesium | | 114 mg |
| Natrium | | 0,35 g |
| Niacin | | 16 mg |
| Pantothensäure (Vitamin B5) | | 6 mg |
| Phosphor | | 210 mg |
| Vitamin A (Provitamin A) | | 160 µm |
| Vitamin B1 | | 1,1 mg |
| Vitamin B12 | | 2,5 µg |
| Vitamin B2 | | 1,4 mg |
| Vitamin B6 | | 1,4 mg |
| Vitamin C | | 80 mg |
| Vitamin E | | 12 mg |

Durch die B-Vitamine (insbesondere Vitamin B1 und B6) wird insbesondere die Kohlenhydrataufnahme durch die Körperzelle des Sportlers verbessert. Durch das Vitamin C und E wird insbesondere ein Antioxidationsmittel zur Verfügung gestellt, das das Immunsystem des Sportlers stärkt. Die Mineralstoffe dienen vorzugsweise der Versorgung des Sportlers während der sportlichen Betätigung (insbesondere durch Aufnahme in der ersten Phase) und zur Regeneration nach der sportlichen Betätigung (also zur Aufnahme während der dritten Phase).

Weitere Ausführungsformen ergeben sich aus den Unteransprüchen.

## Patentansprüche

1. Sportgetränk, oder Pulver bzw. Konzentrat zum Anrühren eines solchen, zur Aufnahme in einer ersten Phase vor der sportlichen Betätigung, in einer zweiten Phase während der sportlichen Betätigung und in einer dritten Phase nach der sportlichen Betätigung, umfassend eine Vielzahl von Mineralien, und ggf. Vitaminen, sowie mindestens ein immunsystemunterstützendes Mittel, insbesondere mindestens ein Antioxidationsmittel, zur Resorption während der ersten und dritten Phase, und
mindestens ein Kohlenhydrat zur Resorption insbesondere während der zweiten Phase sowie mindestens einen Kohlenhydratresorptionsverstärker zur Steigerung der Kohlenhydratresorption.

2. Sportgetränk, oder Pulver bzw. Konzentrat zum Anrühren eines solchen, nach Anspruch 1, **gekennzeichnet durch** einen Sauerstoffaufnahmeverstärker, insbesondere ein Algenpulver, zur Verbesserung der Sauerstoffaufnahme.

3. Sportgetränk, oder Pulver bzw. Konzentrat zum Anrühren eines solchen, nach Anspruch 1 oder 2, **gekennzeichnet durch** mindestens eine erste kurzkettige Kohlenhydratkomponente zur schnellen Resorption, insbesondere im Dünndarm, zur schnellen Regeneration und Energiebereitstellung während der sportlichen Betätigung, und mindestens eine langkettige Kohlenhydratkomponente zur verzögerten Bereitstellung einer zweiten kurzkettigen Kohlenhydratkomponente und verzögerten Resorption der zweiten kurzkettigen Kohlenhydratkomponente, insbesondere im Dickdarm.

4. Sportgetränk, oder Pulver bzw. Konzentrat zum Anrühren eines solchen, nach einem der vorhergehenden Ansprüche, insbesondere nach Anspruch 4,
**dadurch gekennzeichnet, dass**
erste und zweite kurzkettige Kohlenhydratkomponente identisch sind.

5. Sportgetränk, oder Pulver bzw. Konzentrat zum Anrühren eines solchen, nach einem der vorhergehenden Ansprüche, **gekennzeichnet durch** mindestens ein Monosaccharid, insbesondere Glucose und/oder Fructose, und/oder mindestens ein Disaccharid, insbesondere Saccharose, und/oder mindestens ein Oligosaccharid zur schnellen Regeneration und Energiebereitstellung während der sportlichen Betätigung.

6. Sportgetränk, oder Pulver bzw. Konzentrat zum Anrühren eines solchen, nach einem der vorhergehenden Ansprüche insbesondere nach einem der Ansprüche 3 bis 5,
**dadurch gekennzeichnet, dass**
die mindestens eine langkettige Kohlenhydratkomponente Maltodextrin ist.

7. Sportgetränk, oder Pulver bzw. Konzentrat zum Anrühren eines solchen, nach einem der vorhergehenden Ansprüche, **gekennzeichnet durch** ein Verhältnis des Gesamtgewichtes der einen oder der mehreren kurzkettigen Kohlenhydratkomponenten zu dem Gesamtgewicht der einen oder der mehreren langkettigen Kohlenhydratkomponenten von 1:100 bis 1:10, vorzugsweise 1:40 bis 1:60, insbesondere (etwa) 1:50.

8. Sportgetränk, oder Pulver bzw. Konzentrat zum Anrühren eines solchen, nach mindestens einem der vorhergehenden Ansprüche, insbesondere nach Anspruch 4, **gekennzeichnet durch** ein Verhältnis des Gewichtes der ersten kurzkettigen Kohlenhydratkomponente, vorzugsweise Glucose, zu dem Gewicht einer langkettigen Kohlenhydratkomponenten, vorzugsweise Maltodextrin, **durch** die die zur ersten Komponente identische zweite Kohlenhydratkomponente bereitgestellt wird, von 1:5 bis 1:40, vorzugsweise 1:15 bis 1:25, insbesondere (etwa) 1:20.

9. Sportgetränk, oder Pulver bzw. Konzentrat zum Anrühren eines solchen, nach einem der vorhergehenden Ansprüche, **gekennzeichnet durch**
- Glucose, insbesondere in einem Anteil von 70 % - 85 %, vorzugsweise 78 % und/oder
- Fructose, insbesondere in einem Anteil von 28 % - 34 %, vorzugsweise 31 % und/oder
- Saccharose, insbesondere in einem Anteil von 35 % - 47 %, vorzugsweise 41 % und/oder
- Maltodextrin, insbesondere in einem Anteil von 1,0 % - 2,2 %, vorzugsweise 1,6 % und/oder
- Biotin, insbesondere in einem Anteil von 0,00010 % - 0,00022 %, vorzugsweise 0,00016 % und/oder
- Calcium, insbesondere in einem Anteil von 0,350 % - 1,1 %, vorzugsweise 0,84 % und/oder
- Chlorid, insbesondere in einem Anteil von 0,4 % - 0,9 %, vorzugsweise 0,66 % und/oder
- Folsäure, insbesondere in einem Anteil von 0,0004 % - 0,0009 %, vorzugsweise 0,00066 % und/oder
- Kalium, insbesondere in einem Anteil von 0,7 % - 1,3 %, vorzugsweise 1 % und/oder
- Magnesium, insbesondere in einem Anteil von 0,2 % - 0,5 %, vorzugsweise 0,38 % und/oder
- Natrium, insbesondere in einem Anteil von 0,8 % - 1,6 %, vorzugsweise 1,2 % und/oder
- Niacin, insbesondere in einem Anteil von 0,03 % - 0,08 %, vorzugsweise 0,053 % und/oder
- Pantothensäure (Vitamin B5), insbesondere in einem Anteil von 0,01 %-0,03 %, vorzugsweise 0,02 % und/oder
- Phosphor, insbesondere in einem Anteil von 0,5 % - 0,9 %, vorzugsweise 0,7 % und/oder
- Vitamin A (Provitamin A), insbesondere in einem Anteil von 0,0003 %-0,0007 %, vorzugsweise 0,00053 % und/oder
- Vitamin B1, insbesondere in einem Anteil von 0,002 % - 0,005 %, vorzugsweise 0,0037 % und/oder
- Vitamin B12, insbesondere in einem Anteil von 0,000006 % - 0,00001 %, vorzugsweise 0,0000085 % und/oder
- Vitamin B2, insbesondere in einem Anteil von 0,003 % - 0,006 %, vorzugsweise 0,0046 % und/oder
- Vitamin B6, insbesondere in einem Anteil von 0,003 % - 0,006 %, vorzugsweise 0,0046 % und/oder
- Vitamin C, insbesondere in einem Anteil von 0,2 % - 0,35 %, vorzugsweise 0,27 % und/oder
- Vitamin E, insbesondere in einem Anteil von 0,03 % - 0,05 %, vorzugsweise 0,06 %,
wobei die %-Angaben Gew.-%-Angaben bezogen auf das Gesamtgewicht ohne Berücksichtigung von Wasser sind.

10. Verfahren zur Verabreichung eines Sportgetränkes nach einem der vorhergehenden Ansprüche an einen Sportler umfassend die Schritte:
Verabreichen einer ersten Portion, vorzugsweise 30 bis 60 min., vor der sportlichen Belastung derart, dass die Mineralstoffe zu Beginn der sportlichen Belastung (im Wesentlichen) resorbiert sind,
Verabreichen einer zweiten Portion während der sportlichen Belastung derart, dass eine ausreichende Energieversorgung sichergestellt ist, und
Verabreichen einer dritten Portion nach der sportlichen Belastung zur Wiederauffüllung des Kohlenhydrat- und Mineralstoffspeichers für eine optimierte Regeneration.
